(19) Europäisches Patentamt / European Patent Office / Office européen des brevets

(11) **EP 3 380 561 B1**

(12) **EUROPEAN PATENT SPECIFICATION**

(45) Date of publication and mention
of the grant of the patent:
**12.08.2020 Bulletin 2020/33**

(51) Int Cl.:
***C08L 33/08*** (2006.01)      ***E04D 7/00*** (2006.01)
***C04B 111/00*** (2006.01)      ***C09D 133/08*** (2006.01)

(21) Application number: **16816476.2**

(22) Date of filing: **21.11.2016**

(86) International application number:
**PCT/US2016/063024**

(87) International publication number:
**WO 2017/091490 (01.06.2017 Gazette 2017/22)**

(54) **TWO-COMPONENT AQUEOUS COMPOSITION FOR COATING ROOFING SUBSTRATES AND METHOD OF MAKING ROOF COATINGS**

WÄSSRIGE ZWEIKOMPONENTENZUSAMMENSETZUNG ZUM BESCHICHTEN VON DACHUNTERGRÜNDEN UND VERFAHREN ZUR HERSTELLUNG VON DACHBESCHICHTUNGEN

COMPOSITION AQUEUSE À DEUX COMPOSANTS POUR REVÊTEMENT DE SUBSTRATS DE TOITURE ET PROCÉDÉ DE FABRICATION DE REVÊTEMENTS DE TOITURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2015 US 201562259729 P**

(43) Date of publication of application:
**03.10.2018 Bulletin 2018/40**

(73) Proprietor: **Rohm and Haas Company**
**Philadelphia, PA 19106 (US)**

(72) Inventors:
• **MALLARDI, Joe**
**Collegeville, PA 19426 (US)**
• **RAND, Charles J.**
**Collegeville, PA 19426 (US)**
• **SZEWCZYK, Janah C.**
**Collegeville, PA 19426 (US)**

(74) Representative: **Beck Greener LLP**
**Fulwood House**
**12 Fulwood Place**
**London WC1V 6HR (GB)**

(56) References cited:
**EP-A1- 2 778 195      WO-A1-2014/111292**
**WO-A2-2014/060456**

**Description**

The present invention relates to two-component aqueous compositions for coating roofing substrates comprising, in one component having a pH of from 7.5 to 10, (i) one or more emulsion copolymers having a glass transition temperature (Tg) of from -45°C to 0°C and (ii) one or more anionic surfactants, and, in a separate component, (iii) an aqueous (poly)carboxylic acid or polymeric polyacid, preferably, a (poly)carboxylic acid.

Known elastomeric roof coating compositions that allow for early rain resistance can take minutes to develop early rain resistance and require multiple coats to achieve the proper thickness without mud cracking. The known coating compositions rely on the use and evaporation of ammonia, a volatile organic compound (VOC), to achieve early rain resistance.

The Plastiroute is the closest art but is limited to horizontal traffic markings. This is a different Tg range and different coating composition. US5985366A is the closest to the application (ie roof coatings) but requires raising the pH (ie pH stabilizing as they call it) and intentionally has only a surface quick setting film as they want the material underneath to dry normally.

U.S. Patent no. 5,985,366, to Wright et al., discloses sprayable roof coatings wherein a catalyst having a charge opposite that of the emulsion polymer roof coating is sprayed on top of an applied roof coating. Wright stabilizes the emulsion polymer pH, for example, to 10.75 or higher prior to use to make it cationic and then, after applying the emulsion polymer, sprays on acid as a topical application catalyst, meaning that the emulsion polymer has to have a fairly high acid salt, amine or base concentration to insure acid curing of the top of the applied emulsion copolymer layer. Further, Wright discloses intentionally allowing the emulsion polymer coating underneath the spray to coagulate. Accordingly, the methods in Wright would not allow for a high film build or single application roof coating because the emulsion copolymer coating materials in the applied coating layer do not dry underneath the acid treated top of the coating fast enough to enable the making of a coating thick enough to serve as a useful roof coating. The methods in Wright are useful only to insure early rain resistance of the top of an applied coating layer and do not achieve coating layer through cure.

WO2014/111292 and WO2014/060456 disclose further aqueous compositions for coating roofing substrates.

The present inventors have endeavored to provide aqueous compositions and methods of using them in making roof coatings having an instantaneous or very rapid set that can be applied to a desired film build in one application.

STATEMENT OF THE INVENTION

1. In accordance with the present invention, two-component aqueous compositions for coating roofing substrates comprise, in a component one that has a pH of from 7.5 to 10, or, preferably, 9.1 or less, or, more preferably, less than 8.6, (i) one or more emulsion copolymers having a glass transition temperature (Tg) as determined by differential scanning calorimetry (DSC) of from -45°C to 0°C, preferably, from -35°C to -10°C, (ii) one or more anionic surfactants, and, in a separate component, (iii) an aqueous acid chosen from a (poly)carboxylic acid or polymeric polyacid, preferably, a (poly)carboxylic acid, preferably, acetic acid, wherein component one of the two-component aqueous composition comprises less than 0.09 wt.% of ammonia, all weights based on the total weight of the component one composition, the solids weight ratio of the component one to the separate component ranges from 80:1 to 0.8:1, and the term "solids" is used to refer to any and every material in the two-component composition other than water, ammonia and volatile solvents.

2. In accordance with item 1, above, each of the (i) one or more emulsion copolymers has a weight average molecular weight of from 50,000 to 2,000,000 or, preferably, from 150,000 to 500,000.

3. In accordance with any one of items 1 or 2, above, wherein at least one of the (i) one or more emulsion copolymers comprises, in copolymerized form, a monomer mixture of (a) from 60 wt.% to 94 wt.%, preferably, 65 wt.% or more, or, preferably, up to 93.75 wt.% of one or more soft monomer, such as a $C_4$ to $C_{24}$ alkyl (meth)acrylate, for example, butyl acrylate or ethyl hexyl acrylate, (b) from 6.0 to 35 wt.%, preferably, 29.75 wt.% or less, or, preferably, up to 20 wt.%, of one or more hard vinyl monomers, such as a $C_1$ to $C_3$ alkyl (meth)acrylate, (meth) acrylonitrile or a vinyl aromatic monomer, preferably, methyl methacrylate (MMA) or acrylonitrile (AN), (c) from 0 to 3 wt.%, or, from 0.25 wt.% to 3.0 wt.% or, preferably, up to 2.75 wt.%, of one or more ethylenically unsaturated carboxylic acid group containing monomer, preferably, acrylic or methacrylic acid, or, more preferably, methacrylic acid, and, optionally, (d) from 0 to 1 wt.%, or, preferably, up to 0.8 wt % of a sulfur acid monomer, such as sodium styrene sulfonate (SSS), acrylamidomethyl propane sulfonate (AMPS) or a polymerizable sulfur acid containing surfactant monomer, all monomer wt.%s based on the total solids in the monomer mixture.

4. In accordance with any one of items 1, 2, or 3, above, wherein at least one of the (i) one or more emulsion copolymers comprises, in copolymerized form, a monomer mixture of 19.5 wt.% or less or, preferably, 10 wt.% or less, or, more preferably, 5 wt.% or less of any vinyl aromatic monomer, such as styrene; and, further wherein, the monomer mixture comprises 11 wt.% or less or, preferably, 8 wt.% or less of (meth)acrylonitrile, all monomer wt.%s based on the total solids in the monomer mixture.

5. In accordance with any one of items 1, 2, 3, or 4, above, wherein at least one of the (i) one or more emulsion copolymers comprises, in copolymerized form, from 0.1 to 2 wt.%, based on the total solids in the monomer mixture, of an adhesion promoting ethylenically unsaturated monomer (e), such as a ureido functional (meth)acrylate.

6. In accordance with any of items 1, 2, 3, 4 or 5, above, wherein the one component further comprises one or more pigments, extenders, fillers or mixtures thereof, and has a pigment volume concentration (%PVC) of from 20 to 55 or, preferably, from 30 to 50, or, more preferably, 35 to 45.

7. In accordance with any of items 1, 2, 3, 4, 5, or 6, above, wherein the component one further comprises one or more hydrophilic polymeric dispersant, such as a polymethacrylic acid; in one example, the hydrophilic polymeric dispersant may be used in an amount of from 0.1 to 1 wt.%, or, preferably, 0.7 wt.% or less, or, preferably, 0.2 to 0.4 wt.%, based on the weight of the two-component aqueous compositions.

8. In accordance with any of items 1, 2, 3, 4, 5, 6 or 7, above, wherein the (iii) aqueous acid of the separate component is chosen from an alkanoic acid, such as, formic acid, acetic acid, propionic acid, butyric acid, an alkanedioic acid, such as succinic acid, adipic acid or malonic acid, a tricarboxylic acid, such as citric acid, and a polymeric polyacid, and is, preferably, an alkanoic acid.

9. In accordance with any of items 1, 2, 3, 4, 5, 6, 7, or 8, above, wherein the aqueous acid of the separate component comprises from 0.1 to 30 wt.%, or, preferably, from 2.5 to 12 wt.% of acid in total, all amounts based on the total weight of the aqueous acid composition.

10. In accordance with the present invention, methods of making roof coatings comprise applying sequentially or by co-spraying to a roof substrate a two-component aqueous composition of component one having a pH of from 7.5 to 10, or, preferably, 9.1 or less, or, more preferably, less than 8.6, and comprising (i) one or more emulsion copolymers having a glass transition temperature (Tg) as determined by differential scanning calorimetry (DSC) of from -45°C to 0°C, preferably, from -35°C to -10°C, and (ii) one or more anionic surfactants, and, a separate component, comprising (iii) an aqueous acid chosen from a (poly)carboxylic acid or polymeric polyacid, preferably, acetic acid, wherein the solids weight ratio of the component one to the separate component ranges from 80:1 to 0.8:1, wherein the sequentially applying comprises applying component one and then the separate component, and, wherein component one of the two-component aqueous composition comprises less than 0.09 wt.% of ammonia, all weights based on the total weight of the component one composition, and the term "solids" is used to refer to any and every material in the two-component composition other than water, ammonia and volatile solvents.

11. In accordance with the methods of item 10, above, each of the (i) one or more emulsion copolymers in component one has a weight average molecular weight of from 50,000 to 2,000,000 or, preferably, from 150,000 to 500,000.

12. In accordance with the methods of any one of items 10 or 11, above, wherein at least one of the (i) one or more emulsion copolymers in component one comprises, in copolymerized form, a monomer mixture of (a) from 60wt.% to 94 wt.%, preferably, 65 wt.% or more, or, preferably, up to 93.75 wt.% of one or more soft monomer, such as a $C_4$ to $C_{24}$ alkyl (meth)acrylate, for example, butyl acrylate or ethyl hexyl acrylate, (b) from 6.0 to 35 wt.%, preferably, 29.75 wt.% or less, or, preferably, up to 20 wt.%, of one or more hard vinyl monomers, such as a $C_1$ to $C_3$ alkyl (meth)acrylate, (meth) acrylonitrile or a vinyl aromatic monomer, preferably, methyl methacrylate (MMA) or acrylonitrile (AN), (c) from 0 to 3 wt.%, or, from 0.25 wt.% to 3.0 wt.% or, preferably, up to 2.75 wt.%, of one or more ethylenically unsaturated carboxylic acid group containing monomer, preferably, acrylic or methacrylic acid, or, more preferably, methacrylic acid, and, optionally, from (d) from 0 to 1 wt.%, or, preferably, from 0 to 0.8 wt % of a sulfur acid monomer, such as sodium styrene sulfonate (SSS), acrylamidomethyl propane sulfonate (AMPS) or a polymerizable sulfur acid containing surfactant monomer, all monomer wt.%s based on the total solids in the monomer mixture.

13. In accordance with the methods of any one of items 10, 11, or 12, above, wherein to improve weatherability in a coating made therewith, at least one of the (i) one or more emulsion copolymers in component one comprises, in copolymerized form, a monomer mixture of 19.5 wt.% or less or, preferably, 10 wt.% or less, or, more preferably, 5 wt.% or less of any vinyl aromatic monomer, such as styrene; and, further wherein, the monomer mixture comprises 11 wt.% or less or, preferably, 8 wt.% or less of (meth)acrylonitrile, all monomer wt.%s based on the total solids in the monomer mixture.

14. In accordance with the methods of any one of items 10, 11, 12, or 13, above, wherein at least one of the (i) one or more emulsion copolymers in component one comprises, in copolymerized form, from 0.1 to 2 wt.%, based on the total solids in the monomer mixture, of an adhesion promoting ethylenically unsaturated monomer (e), such as a ureido functional (meth)acrylate.

15. In accordance with the methods of any of items 10, 11, 12, 13 or 14, above, wherein the component one further comprises one or more pigments, extenders, fillers or mixtures thereof, and has a pigment volume concentration (%PVC) of from 20 to 55 or, preferably, from 30 to 50, or, more preferably, 35 to 45.

16. In accordance with the methods of any of items 10, 11, 12, 13, 14, or 15, above, wherein the component one further comprises one or more hydrophilic polymeric dispersant, such as a polymethacrylic acid; in one example, the total hydrophilic polymeric dispersant may be present in an amount of from 0.1 to 1 wt.%, or, preferably, 0.7 wt.% or less, or, preferably, from 0.2 to 0.4 wt.% based on the weight of the two-component aqueous compositions.

17. In accordance with the methods of any of items 10, 11, 12, 13, 14, 15 or 16, above, wherein the (iii) aqueous acid of the separate component is chosen from an alkanoic acid, such as, formic acid, acetic acid, propionic acid, butyric acid, an alkanedioic acid, such as succinic acid, adipic acid or malonic acid, or a tricarboxylic acid, such as citric acid, and a polymeric polyacid, and is, preferably, an alkanoic acid.

18. In accordance with the methods of any of items 10, 11, 12, 13, 14, 15, 16, or 17, above, wherein the aqueous acid of the separate component comprises from 0.1 to 30 wt.%, or, preferably, from 2.5 to 12 wt.% of total acid, all amounts based on the total weight of the aqueous acid composition.

19. In accordance with the methods of any of items 10, 11, 12, 13, 14, 15, 16, 17, or 18, above, wherein the

20. Preferably, in accordance with any one of the methods of items 10 to 19, above, the applying is continued until a coating having an average dry thickness of from 300 to 3,000 $\mu$m, or, preferably, from 500 to 1,200 $\mu$m has been applied to the roofing substrate.

21. Preferably, in accordance with any one of the compositions of items 1 to 9, above, or any one of the methods of items 10 to 20, above, the total solids weight of the component one composition to the solids weight of acid in the separate composition ranges from 80:1 to 0.8:1, or, more preferably, from 7:1 to 1:1.

All ranges recited are inclusive and combinable. For example, a disclosed proportion of 0.2 wt.% or more of hydrolysable silane, or up to 2.0 wt.%, preferably, 0.5 wt.% or more, or, preferably, 1.5 wt.% or less, or more preferably, 0.7 wt.% or more, based on the total weight of emulsion copolymer solids would include proportions of from 0.2 to 2.0 wt.%, or of from 0.2 to 1.5 wt.%, or of from 0.2 to 0.7 wt.%, or of from 0.2 to 0.5 wt.%, or of from 0.5 to 2.0 wt.%, or of from 0.5 to 1.5 wt.%, or of from 0.5 to 0.7 wt.%, or of from 0.7 to 2.0 wt.%, or of from 0.7 to 1.5 wt.%, or of from 1.5 to 2.0 wt.%.

Unless otherwise indicated, all temperature and pressure units are room temperature and standard pressure.

All phrases comprising parentheses denote either or both of the included parenthetical matter and its absence. For example, the phrase "(meth)acrylate" includes, in the alternative, acrylate and methacrylate.

Unless otherwise indicated, as used herein, the term "glass transition temperature" or "Tg" refers to the mid-point glass transition temperature of a polymer as determined by differential scanning calorimetry, measured using a DSC Q2000 (TA Instruments, New Castle, DE) in accordance with ASTM E-1356 (1991), wherein a given emulsion copolymer was dried over night at 60°C and then cooled to a temperature of -70 °C before scanning from -70 °C to 130 °C with a ramp rate of 20°C /minute. The results were averaged over two runs (original and a rescan run with a different sample of the same polymer).

As used herein, unless otherwise indicated, the term "calculated Tg" or "calculated glass transition temperature" refers to the Tg of a polymer calculated by using the Fox equation (T. G. Fox, Bull. Am. Physics Soc., Volume 1, Issue No. 3, page 123 (1956). For reference and use in calculating a Tg, a comprehensive compilation of available data describing glass transition temperatures of homopolymers from suitable monomers can be found in Polymer Handbook, Vol. 1, editors Brandrup, J.; Immergut, E. H.; Grulke, E. A., 1999, pages VI/193-277.

As used herein, unless otherwise indicated, the term "coating thickness" refers to an average of at least three measurements of a dried coating applied on a release paper roofing substrate, as measured using an Ames Gage, Model 13C-B2600 (Ames Corporation Waltham MA).

As used herein, the term "(meth)acrylate" means acrylate, methacrylate, and mixtures thereof and the term "(meth)acrylic" used herein means acrylic, methacrylic, and mixtures thereof.

As used herein, the term "polymer" refers, in the alternative, to a polymer made from one or more different monomer, such as a copolymer, a terpolymer, a tetrapolymer, a pentapolymer etc., and may be any of a random, block, graft, sequential or gradient polymer.

As used herein, the term "pigment volume concentration" or %PVC refers to the quantity calculated by the following formula:

$$PVC\ (\%) = \frac{volume\ of\ pigment(s) + volume\ extender(s) + volume\ of\ filler(s)}{Total\ dry\ volume\ of\ coating.} \times 100$$

As used herein, the term "hard vinyl monomer" means any monomer which would if polymerized to yield a homopolymer having a weight average molecular weight of 50,000 or greater form such a homopolymer with a glass transition temperature of 10 °C or more, or, preferably, 25 °C or more. Examples include (meth)acrylonitrile, methyl methacrylate, ethyl methacrylate, isopropyl methacrylate, and styrene.

As used herein, the term "soft monomer" refers to any $C_4$ to $C_{24}$ alkyl (meth)acrylate monomer which would if polymerized to yield a homopolymer having a weight average molecular weight of 50,000 or greater form such a homopolymer with a glass transition temperature of -20 °C or less, or, preferably, -30 °C or less. Examples include almost any $C_4$ to $C_{24}$ alkyl (meth)acrylate except t-butyl acrylate, n-hexadecyl acrylate and neopentyl acrylate, isobornyl acrylate, butyl methacrylate, and isobutyl methacrylate. For reference, a comprehensive compilation of available data describing glass transition temperatures of homopolymers can be found in Polymer Handbook, Vol. 1, editors Brandrup, J.; Immergut, E. H.; Grulke, E. A., 1999, pages VI/193-277.

As used herein, the term "total emulsion copolymer solids" refers to the copolymerized monomers, chain transfer agents, and surfactants in a given emulsion copolymer composition.

As used herein, the term "total solids in the monomer mixture" refers to monomers as well as to reactive materials, such as chain transfer agents and the acids in the separate component.

As used herein, the term "total composition solids" or "solids" refers to any and every material in the two-component composition other than water, ammonia and volatile solvents.

As used herein, the term "substantially zinc free" or "substantially multivalent transition metal ion free" refers to a composition containing less than 750 ppm, or, preferably, less than 500 ppm of zinc, whether in elemental form, i.e. as a metal, as an ion or as that portion of a compound that is itself zinc, such as the zinc in zinc oxide or its salt.

As used herein, unless otherwise indicated, the term "average particle size" means a weight average particle size as determined by light scattering (LS) using a BI-90 particle size analyzer (Brookhaven Instruments Corp. Holtsville, NY).

As used herein, the term "weight average molecular weight" or "MW" refers to the weight average molecular weight as measured by aqueous gel permeation chromatography (GPC), using, for aqueous solution polymers (e.g. polymeric polyacids), polyacrylic acid (PAA) standards, and, for aqueous emulsion copolymers, polystyrene standards.

As used herein, the phrase "wt.%" stands for weight percent.

In accordance with the present invention, two-component aqueous compositions can be applied in multiple passes giving a desired roof coating thickness in one application rather than in two or more applications. The present inventors have surprisingly found that emulsion copolymer compositions containing one or more anionic surfactants can instantly form a homogenous film when combined during application with an organic acid or polymeric polyacid having carboxyl groups as a separate component. The compositions are low odor compositions as well because there is no need to raise the pH of the coating or use volatile base to achieve cure. In addition, low concentrations of relatively weak and inexpensive organic acids, such as acetic acid or vinegar, can effectively be co-sprayed or sequentially layered with the emulsion copolymer compositions to achieve a homogeneous film. The applied coating can be layered and sets within 10 seconds to 600 seconds, or preferably, in less than 60 seconds. The set time can be reduced by any or all of increasing the amount of acid, by a co-spray application method, and by selecting a preferred type of acid allowing one to build multiple coating layers that can provide a suitable roof coating in a single application. Finally, the two-component aqueous compositions enable formulation with conventional fillers, extenders and opacifiers ($CaCO_3$, $TiO_2$, ZnO) as those materials do not significantly buffer the compositions or adversely affect the setting of the coating compositions.

The two-component aqueous compositions and methods of the present invention enable one to provide elastomeric white roof coatings in a single application.

The aqueous emulsion copolymer compositions of component one comprise one or more anionic surfactant emulsion; and the separate component comprises aqueous acid to effect curing.

The amount of acid groups and the concentration of the acid, including the molecular weight of the acid and its pKa, will impact the rate of curing or setting. Thus, the type and concentration of aqueous acid can be used to control the setting process. For example, effective as the separate component are:

A 2 wt.% solution of acetic acid;
a 5 wt.% solution of citric acid; or,
a 10 to 25 wt.% solution of a polymeric polyacid.

In an application, a separate component of a 20 wt.% solution of a polyacrylic acid having a weight average molecular weight of about 2,700 provide an instantly non-deformable surface. Further, a 25 wt.% solution of the same polyacid was applied in a co-spray with an acrylic emulsion copolymer composition to provide a clear fluid with no deformation under the pressure of a hand touch. The combination of the two-component composition allowed for multiple passes in coating a roofing substrate and resulting in a homogenous film upon drying of 540 $\mu$m in thickness.

Preferably, the aqueous acid comprises an alkanoic acid or an alkanedioic acid in a 1 to 10 wt.% solution.

The aqueous emulsion copolymer of the present invention is copolymerized from a monomer mixture of one or more soft monomer (a) with one or more hard vinyl monomer (b), and, if desired, one or more ethylenically unsaturated carboxylic acid group containing monomer (c).

The aqueous emulsion copolymer of the present invention can be prepared by emulsion polymerization techniques well known in the art for making emulsion copolymers from hydrophobic soft monomers. For example, U.S. Pat.

No. 5,521,266 discloses suitable polymerization processes for suitable for forming emulsion copolymers made from one or more hydrophobic monomer, such as an alkyl (meth)acrylate having an alkyl group of from 8 to 24 carbon atoms, or, preferably, at least one such alkyl (meth)acrylate having an alkyl group of from 8 to 18 carbon atoms. Especially in the case of a (meth)acrylate having an alkyl group of from 8 to 24 carbon atoms, the monomer can be complexed with a macromolecular organic compound having a hydrophobic cavity by mixing them to form a complexed mixture, and charging the complexed mixture, along with any other monomers to a reaction vessel. Alternatively, a macromolecular organic compound having a hydrophobic cavity may be added to the reaction vessel before, during or after the monomer mixture has been charged. Suitable macromolecular organic compounds having a hydrophobic cavity may include, for example, cyclodextrin and cyclodextrin derivatives; cyclic oligosaccharides having a hydrophobic cavity such as cycloinulohexose, cycloinuloheptose, and cycloinuloctose; calyxarenes; and cavitands. The ratio of hydrophobic monomer to the macromolecular organic compound having a hydrophobic cavity may range from 1:5 to 5000:1, preferably 1:1 to 1000:1.

The polymerization of the aqueous emulsion copolymer of the present invention is catalyzed by an initiator, such as a peracid or its salt, for example, ammonium persulfate, or by a redox polymerization method which contains a reductant such as metabisulfite or sulfite salt. Such emulsion copolymers may be made by conventional methods, such as, for example, by including in the polymerization any of a wide variety of initiators, such as thermal (e.g. persulfates, peroxides, hydroperoxides, peroxyesters) and redox initiators (suitable combinations of substantially water-soluble oxidants and reductants, e.g. tert-butyl hydroperoxide and sodium bisulfite, with or without added transition metal catalysts such as iron, cobalt, or manganese salts), and chain transfer agents, such as, for example, alkyl mercaptans, halogen compounds. Preferably, the chain transfer agent is hydrophobic, such as n-dodecyl mercaptan (n-DDM or DDM) or any $C_4$ to $C_{18}$ mercaptan.

Suitable conventional aqueous emulsion polymerization methods for making emulsion copolymers may include, for example, polymerizing in the presence of from 0.01 to 1 wt.%, based on the total weight of monomers used to make the copolymer, of one or more surfactants, or, preferably, in the presence of small amounts of surfactant, such as, for example, from 0.01 to 0.4 wt.%, based on the total weight of monomers used to make the copolymer, preferably, 0.08 to 0.32 wt.%. Anionic surfactants are preferably used.

As is known in the art, a monomer mixture is selected to give a desired Tg. The monomer components of the aqueous emulsion copolymer should be selected such that the Tg of the dried copolymer is from -45 °C to 0 °C, and, preferably, from -30°C. to -10°C. Polymers having Tg's above 0°C yield coatings which may lose their flexibility at low temperature. Polymers having Tg's of -50°C or below are prone to tack issues, low tensile strength, and bleed-through of colored chemicals from substrate into coatings thereon, thereby deteriorate the performance of the coatings.

Suitable soft monomers for use as monomer (a) of the present invention may include, for example, a $C_4$ to $C_6$ alkyl (meth)acrylate monomer, such as, for example, n-butyl acrylate (BA), iso-butyl acrylate; a C7-C24 alkyl or alkylaryl (meth)acrylate monomer, such as, for example, ethylhexyl acrylate (EHA), octyl methacrylate, isooctyl methacrylate, decyl methacrylate (n-DMA), isodecyl methacrylate (IDMA), lauryl methacrylate (LMA), pentadecyl methacrylate, stearyl methacrylate (SMA), octyl acrylate, isooctyl acrylate, decyl acrylate, isodecyl acrylate, lauryl acrylate (LA), the ($C_{12}$ to $C_{15}$) alkyl methacrylates, cyclohexyl acrylate and cyclohexyl methacrylate. Preferably, soft monomers are hydrophobic monomers, such as fatty or $C_{12}$ to $C_{18}$ alkyl (meth)acrylates, such as LMA, SMA, n-DMA, and IDMA.

Suitable hard vinyl monomers (b) may include, for example, (meth)acrylic ester monomers including $C_1$ to $C_3$ alkyl (meth)acrylates, such as methyl methacrylate (MMA), ethyl (meth)acrylate; $C_1$ to $C_{20}$ cycloaliphatic (meth)acrylates, such as isobornyl methacrylate and cyclohexyl methacrylate; vinyl aromatics, such as styrene, alkylstyrenes (methyl and ethyl), like alpha methyl styrene; (meth)acrylonitrile; (meth)acrylamide or substituted (meth)acrylamides.

Preferably, to avoid water sensitivity in composition made therefrom, the amount of (meth)acrylamide or substituted (meth)acrylamides used as a hard vinyl monomer ranges up to 2.5wt.%, or, preferably, up to 1.25wt.%, based on the total solids in the monomer mixture.

To improve stability in aqueous compositions, the aqueous emulsion copolymer may include carboxylic acid functionality by way of (c) an ethylenically unsaturated carboxylic acid group containing monomer, such as, for example, maleic acid or anhydride, itaconic acid or, preferably, methacrylic acid (MAA) and acrylic acid (AA).

Preferably, any acrylic acid is added in a polymer seed or in an initial charge to a polymerization reactor, thereby limiting any adverse impact on water swelling resistance.

Other ethylenically unsaturated acid monomers (d) may be used in amounts of up to 1.2 wt.%, or, preferably, up to 0.8 wt.%, all monomer wt.%s, based on the total solids in the monomer mixture, and include acids with sulfur acid functionality and phosphorus acid monomers. Suitable ethylenically unsaturated sulfur containing acid functional monomers may include, for example, sodium styrene sulfonate (SSS), and (meth)acrylamidopropane sulfonate. Examples of suitable phosphorus acid monomers may include, for example, phosphoalkyl (meth)acrylates such as phosphoethyl methacrylate.

Preferably, the aqueous emulsion copolymer comprises the reaction product of less than 2 wt.%, or, more preferably, less than 0.5 wt.%, based on the total solids in the monomer mixture of a multi-ethylenically unsaturated monomer. The resulting emulsion copolymer is more linear and has greater elongation %.

Preferably, to enhance dirt pickup resistance, the emulsion copolymer comprises from 0.1 to 6 wt.%, preferably, 0.5 to 5 wt.%, based on the total solids in the monomer mixture, of acetoacetoxyethyl methacrylate.

To reduce gel content in the aqueous emulsion copolymer of the present invention, preferably, a very low level, e.g. up to 0.8 wt.%, based on total solids in the monomer mixture, of one or more sulfur acid monomer (d), e.g SSS, acts as an in-process stabilizer to significantly reduce gel formation during synthesis without hurting water resistance properties, and has no significant negative effect on water swelling. Further, the sulfur acid monomer could be used to enhance polymerization.

Preferably, the aqueous emulsion copolymer of the present invention comprises the copolymerizate of one or more adhesion promoting ethylenically unsaturated monomers (e), such as an ethylene ureido functional ethyl methacrylate monomer. Other such suitable monomers include ureidoalkyl (meth)acrylates, ureidoalkyl (meth)acrylamides and other ureido group containing monomers such as, for example, those disclosed in U.S. Patent no. 3,356,627 to Scott.

Polymerizable surfactant monomers may be used in the monomer mixture of the present invention in amounts of up to 1 wt.%, based on the total solids in the monomer mixture, to increase the potential scope of monomer mixtures useful to make the emulsion copolymers of the present invention. Suitable such monomers may include styrenated phenol sulfates, such as those available as Hitenol™ BC-1025 (Montello inc., Tulsa, OK), Aerosol™ NPES - 930 (polyoxyethylene) nonylphenol (NP) ammonium sulfate (Cytec Industries, Woodland Park, NJ), and ethoxylated styrenated phenol sulfates, such as E-Sperse™ RS-1596 and E-Sperse™ RS-1618 comprising a styrenated phenol hydrophobe with 2 equivalents of allyl glycidyl ether ethoxylated with 15 moles or ethylene oxide, sulfated and neutralized (Ethox Chemicals, Greenville, SC) and sodium dodecylallyl sulfosuccinate such as TREM™ LF-40 (Cognis, Cincinnati, OH).

To control the molecular weight of the emulsion copolymer of the present invention, chain transfer agents, such as, for example, alkyl mercaptans, halogen compounds may be used. Preferably, the chain transfer agent is hydrophobic, such as n-dodecyl mercaptan (n-DDM or DDM) or any $C_4$ to $C_{18}$ mercaptan.

Preferably, to insure a high solids content in the aqueous compositions of the present invention, chain transfer agents (CTA) such as, for example, n-dodecylmercaptan should be used in amounts ranging from 0 wt.%, or 0.01 wt.%, based on the weight of total solids in the monomer mixture, to 0.3 wt.%, or, more preferably, 0.2 wt.% or less, or, more preferably, 0.1 wt.%, or less. Use of such low amount of the CTA in an emulsion copolymer avoids an increase in water swell or a decrease in elongation in coatings made from the emulsion copolymers.

The aqueous emulsion copolymer of the present invention may have a weight average particle size of from 80 to 500 nm, such as, for example, a relatively large particle size of from 200 to 500 nm which improves adhesion and increases the critical %PVC of compositions containing them, i.e. the non-binder loading capacity of the coating compositions.

Preferably, large particle size emulsion copolymers may be formed by, for example, polymerizing the monomer mixture under low shear during polymerization. In addition, use of an amount of surfactant below 0.4 wt.%, based on the total weight of monomers, may improve the water resistance of coatings or films made from the coating compositions.

Suitable aqueous emulsion copolymers have a weight average molecular weight of 50,000 to 2,000,000, preferably 150,000 or more, or, preferably, 500,000 or less. In addition, use of emulsion copolymers of such a molecular weight enable an increase in the critical %PVC of compositions containing them.

In one example of a suitable aqueous emulsion polymerization method, the monomer mixture is subject to gradual addition emulsion polymerization.

Another suitable aqueous emulsion polymerization method comprises shot polymerization with up to 0.2 wt.% of total nonionic and anionic surfactants or just anionic surfactants, based on the total solids in the monomer mixture and a preferred level of chain transfer agent.

Additional anionic surfactant (ii) can be added to the aqueous emulsion copolymers of the present invention after polymerization. Total amounts of anionic surfactant in component one of the present invention should range from 0.1 to 6 wt.%, or, preferably, from 0.1 to 0.4 wt.%, based on total emulsion copolymer solids.

Suitable anionic surfactants may include, for example, sulfate containing surfactants, such as sodium lauryl sulfate, sulfonate containing surfactants sodium dodecylbenzene sulfonate, and sulfosuccinate containing surfactants, such as dioctyl or dihexyl sulfosuccinates.

The solids level of the aqueous component one compositions of the present invention may range 15 wt.% or higher and up to 80 wt.%, preferably, 40 wt.% or higher, or, more preferably, 50 wt.% or higher, or, even more preferably, 60 wt.% or higher, all wt.%s based on the total solids of the compositions, including any fillers, extenders and pigments and any solid additive present in a coating or film made from the compositions.

Preferably, the two-component aqueous compositions of the present invention have a VOC content of 100 g/L or less, preferably, 50 g/L or less.

The aqueous component one compositions of the present invention can have a pigment volume concentration (%PVC) of from 20 to 55 or, preferably, 30 to 50, or, more preferably, from 35 to 45. Total volumes of pigment, extender and/or opacifier in excess of 50 %PVC will impair elongation, whereas a lack of sufficient volume of such material can impair tensile strength of a coating made from the aqueous compositions of the present invention.

The two-component compositions of the present invention may comprise conventional fillers and processing aids for elastomeric roof coatings, so long as the amount of ammonia and added salt is limited to within the desired levels.

Preferably, the component one of the present invention is pigmented and also contain extenders or fillers. Suitable pigments may be opacifiers, for example, titanium dioxide, hollow sphere or void containing or polymer pigments; iron oxides, IR reflective pigments or zinc oxide. Suitable extenders may be, for example, calcium carbonate, clay, mica, talc, alumina silicates, aluminum trihydrate, nepheline syenite or mixtures of any of these with other extenders. Fillers and extenders are considered the same thing. Preferably, the component one of the present invention comprises one or more extenders, such as calcium carbonate, and one or more pigments, such as titanium dioxide, or iron oxide.

Clearcoat compositions may be formulated with extenders and no pigments.

The aqueous component one compositions of the present invention may be, for example, substantially zinc free or substantially multivalent transition metal ion free which retain good water swell and dirt pick up resistance performance in coatings, the compositions having a %PVC of 43 or higher and comprising emulsion copolymers having a Tg of from -30 to -10 °C, wherein the monomer mixture from which the emulsion copolymer is made comprises (meth)acrylonitrile in the amount of from 0.5 to 8 wt.%, a $C_1$ to $C_3$ alkyl (meth)acrylate, preferably methyl methacrylate, in the amount of from 8 to 20 wt.%, or their combination, all monomer wt.%s based on the total solids in the monomer mixture.

The component one compositions of the present invention may also comprise one or more hydrophilic polymeric dispersant, such as a polymethacrylic acid, or a polyacid salt, e.g. alkali(ne) metal salt, for example, polyMAA, its Na salt. Any hydrophilic dispersant that can stabilize pigments, extenders and/or fillers and wet out substrate surface in use may be used, such as, for example, copolymer dispersants like Tamol™ 851 (Na poly(MAA)) or 1124 (poly(AA-co-hydroxypropyl acrylate)) dispersants (Dow Chemical, Midland, MI), or Rhodoline™ 286N dispersants (Rhodia, Cranbury, NJ), hydrophilic copolymer acid salts, alkali soluble polymer or resin salts, and phosphoethyl methacrylate (PEM) polymer and copolymer dispersants.

Suitable hydrophilic polymeric dispersants may contain the polymerization product of less than 30 wt.%, or, preferably, 20 wt.% or less, based on the total weight of monomers used to make the copolymers, of monomers like alkyl (meth)acrylates, dienes or olefins other than hydrophilic acid monomers. Preferred hydrophilic dispersants may have a weight average molecular weight of 5,000 or more, preferably 8,500 or more.

Hydrophilic polymeric dispersants do not include emulsion copolymer dispersants or block copolymer dispersants comprising more than 20 wt.%, based on the total weight of copolymerized monomers, of a block that would not form a water soluble homopolymer ($\geq$50g/L dissolves at room temp upon mixing) at the weight average molecular weight of the dispersant block in use. Thus, if a block of a monomer in a block copolymer has a weight average molecular weight of 1,000 in the dispersant, then a homopolymer having a weight average molecular weight of 1,000 of the same monomer used to make the block in the dispersant is evaluated to see if it is water soluble.

To avoid excessive water sensitivity, and possible loss of adhesion, hydrophilic dispersants should be used in amounts of 2 wt.% or less, based on the total pigment, filler and extender solids in the component one compositions.

Preferably, improved adhesion is observed in coatings made from compositions comprising one or more hydrolysable silanes or alkoxy silanes, which preferably have two or three hydrolysable groups. Suitable amounts of epoxysilane, aminosilane, vinyl alkoxysilane are the same. Combinations of the epoxysilanes and aminosilanes may be used.

Suitable aminosilanes may comprises an amino-alkyl functional group and is hydrolysable, having, for example, one or more alkoxy group or aryl(alkyl)oxy functional group. Preferably, the amino silane has two or more amino functional groups and two or, more preferably, three hydrolysable groups, i.e. tri-alkoxy.

Examples of suitable aminosilanes include Momentive™ Silquest™ A-1120 (Momentive Performance Materials, Albany, NY) or Dow-Corning Z-6020 (Dow Corning, Midland, MI), each of which are aminoethylaminopropyl trimethoxysilanes. Other suitable silanes include, for example, Momentive™ Silquest™ A-174 which is methacryloxypropyltrimethoxysilane, Dow Corning Z-6040 (Dow Corning, Midland, MI), which is glycidoxypropy trimethoxysilane, and Silquest Wetlink™ 78, (Momentive Performance Materials, Albany, NY), a glycidoxypropylmethyl diethoxysilane.

Silanes may be used in amounts ranging from 0.2 wt.% or more, or up to 2.0 wt.%, preferably, 0.5 wt.% or more, or, preferably 1.5 wt.% or less, or, more preferably, 0.7 wt.% or more, based on the total weight of emulsion copolymer solids in the component one composition.

The component one compositions of the present invention may additionally comprise one or more of thickeners, such as hydroxyethylcellulose (HEC) or modified versions thereof, UV absorbers, surfactants, coalescents, wetting agents, thickeners, rheology modifiers, drying retarders, plasticizers, biocides, mildewicides, defoamers, colorants, waxes, and silica.

To insure enhanced weatherability, the component one compositions may preferably include one or more UV absorber or light stabilizer, such as benzophenone (BZP), or butylated hydroxytoluene (BHT) or hindered amines in the total amount of from 0 to 1 wt.%, based on the total solids of the composition, preferably, 0.05 wt.% or more or up to 0.5 wt.%.

Preferably, to reduce the toxicity and environmental issues in the aqueous two-component compositions of the present invention, the compositions of the present invention comprise no or substantially no (350 ppm or less) benzophenone but retain the same good dirt pick up resistance in coatings as those made from compositions which contain 0.3 wt.%, based on total two-component composition solids, of benzophenone.

The aqueous component one compositions of the present invention may be prepared by mixing the elastomeric aqueous emulsion copolymer with conventional components in high speed dispersion equipment such as a Cowles disperser, or a Sigma mill for caulks and sealants.

To formulate the component one compositions of the present invention with a silane, the silane can be added with stirring, such as overhead stirring, preferably before pigments, fillers or extenders are added.

Preferably, the pigmented two-component compositions of the present invention are suitable for making white roof coatings or white roof maintenance coatings.

The two-component compositions of the present invention are preferably used as topcoats or topcoat maintenance coatings, especially if formulated with UV absorbers or light stabilizers, or can be used as the basecoat or maintenance basecoats in two coat system, e.g. with the same or different topcoat or mastic.

Preferably, substrates can be prepared for coating with cleaning or treatment by physical abrasion, flame ionization, powerwashing with water, applying an aqueous cleaning solution, such as, for example, from 5 to 10 wt.% trisodium phosphate, or other cleaning agents, followed by powerwashing with water, or plasma treatment prior to coating.

For use on weathered TPO substrates, the compositions formulations of the present invention, preferably are substantially free of zinc oxide, zinc containing additives or zinc ions. Zinc reduces the adhesion of the coating to weathered TPO. Accordingly, the compositions are substantially zinc free and contain less than 750 ppm of Zn, whether as metal, ions or as that portion of a compound that is itself zinc, the weight based on the total solids of the composition, preferably less than 100 ppm.

The two-component compositions of the present invention can be used on any roofing substrates to form a roof coating.

The two-component compositions of the present invention may be applied to a wide variety of weathered and unweathered roofing substrates, such as, for example, asphaltic coatings, roofing felts, synthetic polymer membranes; foamed polyurethane, for example, spray polyurethane foam; and metals, such as aluminum; thermoplastic polyolefins (TPO), silicone rubber and ethylene propylene diene rubber (EPDM) or to previously painted, primed, undercoated, worn, or weathered substrates, such as metal roofs, weathered TPO, weathered poly(vinyl chloride) (PVC), weathered silicone rubber and weathered EPDM rubber. Other suitable substrates include modified bitumen membrane.

EXAMPLES: The following Examples illustrate the advantages of the present invention. Unless otherwise stated, all conditions are standard pressure and room temperature.

The following materials and abbreviations were used in the Examples:

BA: butyl acrylate, LMA: lauryl methacrylate; MMA: methyl methacrylate; STY: styrene; AN: acrylonitrile; MAA: methacrylic acid; Ureido: ethylene ureido functional ethyl methacrylate monomer; DDBS: sodium dodecyl benzene sulfonate; SLS; sodium laureth sulfate; ANS: ammonium nonoxynol-4 sulfate; Seed: BA-MMA seed polymer (100 nm average particle size)

emulsion copolymer 1: A 55 wt.% solids, single stage copolymer having a pH of 9, a DSC glass transition temperature (Tg) of -26.33 °C, made from (by solids weight%) 85.1 BA/12.3 MMA/1.6 MAA/1 Ureido with 2.2 wt.% Seed and 0.11 wt.% DDBS, and containing 0.13 wt.% ammonia;

emulsion copolymer 2: A 55 wt.% solids, single stage copolymer having a pH of 8, a DSC Tg of -10.2 °C, made from (by solids weight%) 70.3 BA/27 STY/2.7 MAA with 2.0 wt.% Seed, 0.25 wt.% SLS and 0.20 wt.% ANS, and containing 0.13 wt.% ammonia;

hydrophilic dispersant: polymethacrylic acid sodium carboxylate, 30 wt.% in water;

dispersant: Tamol™ 681 dispersant, (Acrylic copolymer, 37-38 wt.% solids in water and propanediol, The Dow Chemical Company, Midland, MI (Dow);

defoamer: DEEFO™ 1015 defoamer: (Petroleum distillates, solvent dewaxed heavy paraffinic CAS#64742-65-0 >50%, Munzing, Bloomfield NJ);

extender 1: Snowhite™ 12 calcium carbonate (Omya, Cincinnati OH);

rutile titanium dioxide: Ti-Pure™ R-960 titanium dioxide (Chemours, Wilmington DE);

zinc oxide: Zoco™ 101 (zinc oxide, Zochem Inc., Brampton, Ontario, CA);

KTPP: potassium tripolyphosphate (ICL Performance Products, Trenton NJ);

coalescent 1: odorless mineral spirits or OMS;

HEC thickener: Cellosize™ QP-52000 hydroxyethyl cellulose (HEC thickener, Dow);

coalescent 2: UCAR™ Filmer (2,2,4-trimethyl-1,3-pentanediol mono(2-methylpropanoate) CAS#:25265-77-4, Dow);

propylene glycol, (99.9wt.%, Dow);

zinc oxide: Zoco™ 101 ZnO, (Zochem Inc, Brampton, Ontario, CA);

aqueous ammonia, (28 wt.%, Fisher Scientific, St. Louis, MO); and,
polymeric polyacid: Polyacrylic acid with a weight average molecular weight of 2,700.
<u>Test Methods</u>: The following test methods are used in the Examples.

<u>Setting and Film Durability</u>: A total of 0.75 g of the indicated component one compositions in Tables 1A and 1B, below, were drawn down on a 55.9mm by 64.8mm coating section of a polysiloxane coated release Paper (RP-1K 219 mm x 286 mm (8 5/8 x 11 ¼ inch) Leneta Mahwah, NJ) that was isolated with a 64.8mm by 64.8mm metal draw down square. To the thus applied coating, a spray (roughly 0.75 grams) of the indicated aqueous acid separate component compositions were then applied thereto using a plastic spray bottle (Dynalon™ Quick Mist™ HOPE Sprayer Bottle, polypropylene trigger, strainer, valve and intake, Dynalab Corp., Rochester, NY). To evaluate the resulting coatings, 10 seconds after the spray was finished, a 100 gram weight with a diameter of 28.575mm (1529.7 Pa) was applied to the surface of the coating for 10 seconds and removed. Clear fluid indicates that no part of the coating was removed under pressure and no deformation means the weight did not deform the film. It is possible to deform the film while the fluid remains clear. Deformation was considered acceptable if the fluid removed from the coating is clear; thus, deformation is acceptable if all composition solids are bound into the coating layer. Table 2, below, summarizes the results.

Table 1A: Coating Example 1

| Material Name | Grams | Level (wt.% s/s or %PVC) |
|---|---|---|
| **Grind** | | |
| Water | 125.00 | |
| hydrophilic dispersant (30 wt.% solids) | 5.00 | 0.27 |
| dispersant | 4.50 | 0.29 |
| KTPP, 100% solids | 1.50 | 0.27 |
| emulsion copolymer 2 | 275.00 | |
| defoamer | 2.00 | |
| extender 1 | 425.00 | 36.24 %PVC |
| rutile titanium dioxide | 100.00 | 5.95 %PVC |
| zinc oxide | 25.00 | 1.04 %PVC |
| subtotal | | 43.23 %PVC |
| **Let Down** | | |
| emulsion copolymer 2 | 200.00 | |
| defoamer | 2.00 | |
| Aqueous Ammonia, 28% | 2.00 | |
| **Premix** OMS, HEC and Water. | | |
| coalescent 1 | 7.00 | 2.68 |
| HEC thickener | 3.00 | |
| Water | 30.00 | |
| | | |
| Water, final solids adjustment | 2.80 | |
| TOTAL | 1211.80 | |

Table 1B: Coating Example 2

| Material Name | Grams | Level (wt.% s/s or %PVC) |
|---|---|---|
| **Grind** | | |
| Water | 152.00 | |

(continued)

| Material Name | Grams | Level (wt.% s/s or %PVC) |
|---|---|---|
| **Grind** | | |
| hydrophilic dispersant | 5.00 | 0.28 |
| KTPP dispersant | 1.50 | 0.28 |
| Defoamer | 1.50 | |
| extender 1 | 425.00 | 36.85 %PVC |
| rutile titanium dioxide | 75.00 | 4.54 %PVC |
| zinc oxide | 45.00 | 1.91 %PVC |
| Sub-total | 706.50 | 43.29 %PVC |
| **Let Down** | | |
| emulsion copolymer 1 | 475.00 | |
| Defoamer | 1.50 | |
| coalescent 2 | 6.00 | 2.30 |
| aqueous ammonia, 28 wt.% | 1.00 | |
| | | |
| propylene glycol | 14.00 | |
| HEC thickener | 4.50 | |
| Water | 2.48 | |
| **Total** | 1216.48 | |

Table 2: Setting and Film Durability for Examples 1 and 2

| Acid Comp | Concentration (wt.% of acid in comp) | Runoff Fluid | Deformation |
|---|---|---|---|
| Acetic | 1 | Clear | Yes |
| Acetic | 2 | Clear | No |
| Acetic | 2.5 | Clear | No |
| Acetic | 5 | Clear | No |
| Citric | 2.5 | Milky | Yes |
| Citric | 5 | Clear | No |
| polymeric polyacid | 2.5 | Milky | Yes |
| polymeric polyacid | 5 | Milky | Yes |
| polymeric polyacid | 7.5 | Milky | Yes |
| polymeric polyacid | 10 | Milky | Yes |
| polymeric polyacid | 12.5 | Clear | Yes |
| polymeric polyacid | 15 | Clear | Yes |
| polymeric polyacid | 20 | Clear | No |

Both of the coatings in Examples 1 and 2 gave the same results in Table 2, above. Without the acid (results not shown), the coating materials adhered completely to the applied weight, thereby evidencing a lack of setting or hardness development in the applied coating layer. As shown in Table 2, organic (poly)carboxylic acids, and particularly alkanoic (mono) acids are more effective in enabling an instant (10 second) set at a low acid concentration. A larger amount of polymeric polyacid (>10 wt.%) in the separate component is needed to insure that the coating solids are bound or cured into the coating layer (clear liquid). Coating hardness after the 10 second setting period in the test is improved more by using the preferred aqueous (poly)carboxylic acid separate component than by the aqueous polymeric polyacid. Ammonia was not involved in the setting of the coatings because less than 0.06 wt.% of the coating compositions contain ammonia.

Film Formation and Film Build (Co-spray method): A Graco Truecoat Plus™ li Airless Handheld Paint Sprayer (Graco Inc., Minneapolis, MN, equipped with a XWD 515 (20 to 25.4 cm (10-12") width, 0.038 cm (0.015") tip) was used along with a Devilbliss™ Type HB siphon Sprayer (Model F-97, 0.076 cm (0.030") BU Tip, Illinois Tool Works, Glenview. IL) to apply the roof coating formulation and the acid. A 25 wt.% aqueous solution of polyacrylic acid with a weight average molecular weight of 2,700 was co-sprayed with coating Example 2 making 3 passes on a piece of polysiloxane coated release paper (Leneta Release Paper RP-1K 219 mm x 286 mm (8 5/8 x 11 ¼ inch)) Mahwah, NJ).

When the coating was touched by hand, only a clear fluid was removed; the coating did not deform. The dry film thickness of the coating was 540 $\mu$m.

The setting and film durability, as measured and reported in Table 2 above, was tested using the co-spray method and applying the 100g weight 30 seconds after spraying. The following acid concentrations were successfully used as the separate acid component in the co-spraying of the two components to make a film having clear fluid running off and, therefore, acceptable deformation:

Acetic acid at 2.5 wt.%, Citric acid at 5 wt.% ,and the 2,700 Mw polyacrylic at 10 wt.%.

It was found that co-spraying rather than sequential application of the two components allowed for polyacrylic acid to be used at lower levels, also meaning that less overall water was used in application.

**Claims**

1. A two-component aqueous composition for coating roofing substrates comprises, in a component one that has a pH of from 7.5 to 10, (i) one or more emulsion copolymers having a glass transition temperature (Tg) as determined by differential scanning calorimetry (DSC) in accordance with ASTM E-1356 (1991) of from -45°C to 0°C, (ii) one or more anionic surfactants, and, in a separate component, (iii) an aqueous acid chosen from a (poly)carboxylic acid or polymeric polyacid,

   wherein, component one of the two-component aqueous composition comprises less than 0.090 wt.% ammonia, based on the total weight of the component one composition,
   the solids weight ratio of the component one to the separate component ranges from 80:1 to 0.8:1, and
   the term "solids" is used to refer to any and every material in the two-component composition other than water, ammonia and volatile solvents.

2. The composition as claimed in claim 1, wherein each of the (i) one or more emulsion copolymers has a weight average molecular weight as measured by aqueous gel permeation chromatography (GPC) using polystyrene standards of from 50,000 to 2,000,000.

3. The composition as claimed in claim 1, wherein at least one of the (i) one or more emulsion copolymers comprises, in copolymerized form, a monomer mixture of (a) from 65 wt.% to 94 wt.%, of one or more soft monomer, (b) from 6.0 to 35 wt.%, of one or more hard vinyl monomers, and (c) from 0 to 3 wt.% of one or more ethylenically unsaturated carboxylic acid group containing monomer, all monomer wt.%s based on the total solids in the monomer mixture, and wherein

   the term "solids" is used to refer to any and every material in the two-component composition other than water, ammonia and volatile solvents,
   the term "hard vinyl monomer" is used to mean any monomer which would, if polymerized to yield a homopolymer having a weight average molecular weight of 50,000 or greater, form such a homopolymer with a glass transition temperature of 10 °C or more, and
   the term "soft monomer" is used to refer to any $C_4$ to $C_{24}$ alkyl (meth)acrylate monomer which would, if polymerized to yield a homopolymer having a weight average molecular weight of 50,000 or greater, form such a homopolymer with a glass transition temperature of -20 °C or less.

4. The composition as claimed in claim 1, wherein at least one of the (i) one or more emulsion copolymers comprises, in copolymerized form, from 0.1 to 2 wt.%, based on the total solids in the monomer mixture, of an adhesion promoting ethylenically unsaturated monomer (e), the term "solids" is used to refer to any and every material in the two-component composition other than water, ammonia and volatile solvents, and the adhesion promoting ethylenically unsaturated monomer (e) comprises an ureido group.

5. The composition as claimed in claim 1, wherein the component one further comprises one or more pigments, extenders, fillers or mixtures thereof, and has a pigment volume concentration (%PVC) of from 20 to 55, as calculated by the following formula:

$$\text{PVC (\%)} = \frac{\text{(volume of pigment(s) + volume extender(s) + volume of filler(s))}}{\text{Total dry volume of coating.}} \times 100$$

6. The composition as claimed in claim 1, wherein the component one further comprises one or more hydrophilic polymeric dispersants.

7. The composition as claimed in any one of claims 1 to 6, wherein the (iii) aqueous acid of the separate component is chosen from an alkanoic acid, an alkanedioic acid, a tricarboxylic acid, and a polymeric polyacid.

8. The composition as claimed in claim 7, wherein the aqueous acid of the separate component comprises from 0.1 to 30 wt.% of total acid, all amounts based on the total weight of the aqueous acid composition.

9. A method of making roof coatings comprising:

applying sequentially or by co-spraying to a roof substrate a two-component aqueous composition of a component one having a pH of from 7.5 to 10, and comprising (i) one or more emulsion copolymers having a glass transition temperature (Tg) as determined by differential scanning calorimetry (DSC) in accordance with ASTM E-1356 (1991) of from -45°C to 0°C, and (ii) one or more anionic surfactants, and, a separate component comprising (iii) an aqueous acid chosen from a (poly)carboxylic acid or polymeric polyacid, wherein
the solids weight ratio of the component one to the separate component ranges from 80:1 to 0.8:1,
the sequentially applying comprises applying component one and then the separate component,
the component one aqueous composition comprises less than 0.09 wt.% ammonia, all weights based on the total weight of the component one composition, and
the term "solids" is used to refer to any and every material in the two-component composition other than water, ammonia and volatile solvents.

10. The method as claimed in claim 9, wherein the (iii) aqueous acid of the separate component is chosen from an alkanoic acid, an alkanedioic acid, a tricarboxylic acid and a polymeric polyacid.

**Patentansprüche**

1. Eine wässrige Zweikomponentenzusammensetzung zum Beschichten von Dachuntergründen beinhaltet, in einer Komponente Eins, die einen pH-Wert von 7,5 bis 10 aufweist, (i) ein oder mehrere Emulsionscopolymere mit einer Glasübergangstemperatur (Tg) von -45 °C bis 0 °C, wie durch dynamische Differenzkalorimetrie (DSC) in Übereinstimmung mit ASTM E-1356 (1991) bestimmt, (ii) ein oder mehrere anionische Tenside und, in einer separaten Komponente, (iii) eine wässrige Säure, gewählt aus einer (Poly)carbonsäure oder einer polymeren Polysäure, wobei Komponente Eins der wässrigen Zweikomponentenzusammensetzung bezogen auf das Gesamtgewicht der Komponente-Eins-Zusammensetzung zu weniger als 0,090 Gew.-% Ammoniak beinhaltet, das Feststoffe-Gewichtsverhältnis der Komponente Eins zu der separaten Komponente von 80 : 1 bis 0,8 : 1 reicht, und der Ausdruck "Feststoffe" verwendet wird, um jegliches und jedes Material in der Zweikomponentenzusammensetzung außer Wasser, Ammoniak und flüchtige Lösemittel zu bezeichnen.

2. Zusammensetzung gemäß Anspruch 1, wobei jedes der (i) ein oder mehreren Emulsionscopolymere ein gewichtsgemitteltes Molekulargewicht, wie durch wässrige Gelpermeationschromatographie (GPC) unter Verwendung von Polystyrolstandards gemessen, von 50 000 bis 2 000 000 aufweist.

3. Zusammensetzung gemäß Anspruch 1, wobei mindestens eins der (i) ein oder mehreren Emulsionscopolymere in copolymerisierter Form eine Monomermischung aus (a) 65 Gew.-% bis 94 Gew.-% von einem oder mehreren weichen Monomeren, (b) 6,0 bis 35 Gew.-% von einem oder mehreren harten Vinylmonomeren und (c) 0 bis 3 Gew.-% von einem oder mehreren ethylenisch ungesättigtem carbonsäuregruppehaltigem Monomer beinhaltet, wobei alle Monomer-Gew.-% auf die Gesamtfeststoffe in der Monomermischung bezogen sind, und wobei der Ausdruck "Feststoffe" verwendet wird, um jegliches und jedes Material in der Zweikomponentenzusammensetzung außer Wasser, Ammoniak und flüchtige Lösemittel zu bezeichnen,

der Ausdruck "hartes Vinylmonomer" verwendet wird, um ein beliebiges Monomer zu bedeuten, das, wenn polymerisiert, um ein Homopolymer mit einem gewichtsgemittelten Molekulargewicht von 50 000 oder mehr zu ergeben, ein solches Homopolymer mit einer Glasübergangstemperatur von 10 °C oder mehr bilden würde, und

der Ausdruck "weiches Monomer" verwendet wird, um beliebiges $C_4$- bis $C_{24}$-Alkyl(meth)acrylatmonomer zu bezeichnen, das, wenn polymerisiert, um ein Homopolymer mit einem gewichtsgemittelten Molekulargewicht von 50 000 oder mehr zu ergeben, ein solches Homopolymer mit einer Glasübergangstemperatur von -20 °C oder weniger bilden würde.

4. Zusammensetzung gemäß Anspruch 1, wobei mindestens eins der (i) ein oder mehreren Emulsionscopolymere in copolymerisierter Form bezogen auf die Gesamtfeststoffe in der Monomermischung zu 0,1 bis 2 Gew-% ein haftvermittelndes ethylenisch ungesättigtes Monomer (e) beinhaltet, wobei der Ausdruck "Feststoffe" verwendet wird, um jegliches und jedes Material in der Zweikomponentenzusammensetzung außer Wasser, Ammoniak und flüchtige Lösemittel zu bezeichnen, und das haftvermittelnde ethylenisch ungesättigte Monomer (e) eine Ureidogruppe beinhaltet.

5. Zusammensetzung gemäß Anspruch 1, wobei die Komponente Eins ferner ein oder mehrere Pigmente, Streckmittel, Füllstoffe oder Mischungen davon beinhaltet und eine Pigmentvolumenkonzentration (% PVC) von 20 bis 55 aufweist, wie durch die folgende Formel berechnet:

$$PVC(\%) = \frac{(\text{Volumen von Pigment(en)} + \text{Streckmittelvolumen} + \text{Volumen von Füllstoff(en)}) \times 100}{\text{Gesamttrockenvolumen der Beschichtung.}}$$

6. Zusammensetzung gemäß Anspruch 1, wobei die Komponente Eins ferner ein oder mehrere hydrophile polymere Dispergiermittel beinhaltet.

7. Zusammensetzung gemäß einem der Ansprüche 1 bis 6, wobei die (iii) wässrige Säure der separaten Komponente aus einer Alkansäure, einer Alkandisäure, einer Tricarbonsäure und einer polymeren Polysäure gewählt ist.

8. Zusammensetzung gemäß Anspruch 7, wobei die wässrige Säure der separaten Komponente zu 0,1 bis 30 Gew.-% Gesamtsäure beinhaltet, wobei alle Mengen auf das Gesamtgewicht der wässrigen Zusammensetzung bezogen sind.

9. Ein Verfahren zum Herstellen von Dachbeschichtungen, beinhaltend:

Auftragen auf einen Dachuntergrund, sequentiell oder durch Co-Sprühen, einer wässrigen Zweikomponentenzusammensetzung einer Komponente Eins mit einem pH-Wert von 7,5 bis 10 und beinhaltend (i) ein oder mehrere Emulsionscopolymere mit einer Glasübergangstemperatur (Tg) von -45 °C bis 0 °C, wie durch dynamische Differenzkalorimetrie (DSC) in Übereinstimmung mit ASTM E-1356 (1991) bestimmt, und (ii) ein oder mehrere anionische Tenside, und eine separate Komponente,

beinhaltend (iii) eine wässrige Säure, gewählt aus einer (Poly)carbonsäure oder einer polymeren Polysäure, wobei

das Feststoffe-Gewichtsverhältnis der Komponente Eins zu der separaten Komponente von 80 : 1 bis 0,8 : 1 reicht,

das sequentielle Auftragen das Auftragen von Komponente Eins und anschließend der separaten Komponente beinhaltet,

die wässrige Komponente-Eins-Zusammensetzung zu weniger als 0,09 Gew.-% Ammoniak beinhaltet, wobei alle Gewichte auf das Gesamtgewicht der Komponente-Eins-Zusammensetzung bezogen sind, und

der Ausdruck "Feststoffe" verwendet wird, um jegliches und jedes Material in der Zweikomponentenzusammensetzung außer Wasser, Ammoniak und flüchtige Lösemittel zu bezeichnen.

10. Verfahren gemäß Anspruch 9, wobei die (iii) wässrige Säure der separaten Komponente aus einer Alkansäure, einer Alkandisäure, einer Tricarbonsäure und einer polymeren Polysäure gewählt ist.

**Revendications**

1. Une composition aqueuse à deux constituants pour le revêtement de substrats de toiture comprend, dans un constituant un qui a un pH allant de 7,5 à 10, (i) un ou plusieurs copolymères en émulsion ayant une température de transition vitreuse (Tg) telle que déterminée par calorimétrie différentielle à balayage (DSC) conformément à l'ASTM E-1356 (1991) allant de -45 °C à 0 °C, (ii) un ou plusieurs tensioactifs anioniques, et, dans un constituant distinct, (iii) un acide aqueux choisi parmi un acide (poly)carboxylique ou polyacide polymérique, dans laquelle, le constituant un de la composition aqueuse à deux constituants comprend moins de 0,090 % en poids d'ammoniaque, rapporté au poids total de la composition de constituant un, le rapport en poids de matières solides du constituant un au constituant distinct est compris dans l'intervalle allant de 80/1 à 0,8/1, et l'expression « matières solides » est utilisée pour faire référence à toute et chaque matière dans la composition à deux constituants autre que l'eau, l'ammoniaque et des solvants volatils.

2. La composition telle que revendiquée dans la revendication 1, dans laquelle chacun des (i) un ou plusieurs copolymères en émulsion a une masse moléculaire moyenne en poids telle que mesurée par chromatographie par perméation de gel aqueux (GPC) en utilisant des étalons de polystyrène allant de 50 000 à 2 000 000.

3. La composition telle que revendiquée dans la revendication 1, dans laquelle au moins un des (i) un ou plusieurs copolymères en émulsion comprend, sous forme copolymérisée, un mélange de monomères de (a) de 65 % en poids à 94 % en poids d'un ou de plusieurs monomères mous, (b) de 6,0 à 35 % en poids d'un ou de plusieurs monomères vinyliques durs, et (c) de 0 à 3 % en poids d'un ou de plusieurs monomères contenant un groupe acide carboxylique éthyléniquement insaturés, les % en poids des monomères étant tous rapportés aux matières solides totales dans le mélange de monomères, et dans laquelle
l'expression « matières solides » est utilisée pour faire référence à toute et chaque matière dans la composition à deux constituants autre que l'eau, l'ammoniaque et des solvants volatils,
l'expression « monomère vinylique dur » est utilisée pour désigner tout monomère qui, s'il était polymérisé pour donner un homopolymère ayant une masse moléculaire moyenne en poids de 50 000 ou plus, formerait un homopolymère du type à présenter une température de transition vitreuse de 10 °C ou plus, et
l'expression « monomère mou » est utilisée pour faire référence à tout monomère de (méth)acrylate d'alkyle en $C_4$ à $C_{24}$ qui, s'il était polymérisé pour donner un homopolymère ayant une masse moléculaire moyenne en poids de 50 000 ou plus, formerait un homopolymère du type à présenter une température de transition vitreuse de -20 °C ou moins.

4. La composition telle que revendiquée dans la revendication 1, dans laquelle au moins un des (i) un ou plusieurs copolymères en émulsion comprend, sous forme copolymérisée, de 0,1 à 2 % en poids, rapporté aux matières solides totales dans le mélange de monomères, d'un monomère éthyléniquement insaturé promoteur d'adhérence (e), l'expression « matières solides » est utilisée pour faire référence à toute et chaque matière dans la composition à deux constituants autre que l'eau, l'ammoniaque et des solvants volatils, et le monomère éthyléniquement insaturé promoteur d'adhérence (e) comprend un groupe uréido.

5. La composition telle que revendiquée dans la revendication 1, dans laquelle le constituant un comprend en sus un ou plusieurs pigments, extendeurs, charges ou mélanges de ceux-ci, et a une concentration pigmentaire volumique (%CPV) allant de 20 à 55, telle que calculée par la formule suivante :

$$\text{CPV (\%)} = \frac{\text{(volume de pigment(s) + volume d'extendeur(s) + volume de charge(s))} \times 100}{\text{Volume sec total de revêtement.}}$$

6. La composition telle que revendiquée dans la revendication 1, dans laquelle le constituant un comprend en sus un ou plusieurs dispersants polymériques hydrophiles.

7. La composition telle que revendiquée dans n'importe laquelle des revendications 1 à 6, dans laquelle le (iii) acide aqueux du constituant distinct est choisi parmi un acide alcanoïque, un acide alcanedioïque, un acide tricarboxylique, et un polyacide polymérique.

8. La composition telle que revendiquée dans la revendication 7, dans laquelle l'acide aqueux du constituant distinct compose de 0,1 à 30 % en poids de l'acide total, les quantités étant toutes rapportées au poids total de la composition acide aqueuse.

9. Un procédé de réalisation de revêtements de toit comprenant :

l'application séquentielle ou par co-pulvérisation sur un substrat de toit d'une composition aqueuse à deux constituants d'un constituant un ayant un pH allant de 7,5 à 10, et comprenant (i) un ou plusieurs copolymères en émulsion ayant une température de transition vitreuse (Tg) telle que déterminée par calorimétrie différentielle à balayage (DSC) conformément à l'ASTM E-1356 (1991) allant de -45 °C à 0 °C, et (ii) un ou plusieurs tensioactifs anioniques, et d'un constituant distinct comprenant (iii) un acide aqueux choisi parmi un acide (poly)carboxylique ou polyacide polymérique, dans lequel

le rapport en poids de matières solides du constituant un au constituant distinct est compris dans l'intervalle allant de 80/1 à 0,8/1,

l'application séquentielle comprend l'application du constituant un et ensuite du constituant distinct,

la composition aqueuse de constituant un comprend moins de 0,09 % en poids d'ammoniaque, les poids étant tous rapportés au poids total de la composition de constituant un, et

l'expression « matières solides » est utilisée pour faire référence à toute et chaque matière dans la composition à deux constituants autre que l'eau, l'ammoniaque et des solvants volatils.

10. Le procédé tel que revendiqué dans la revendication 9, dans lequel le (iii) acide aqueux du constituant distinct est choisi parmi un acide alcanoïque, un acide alcanedioïque, un acide tricarboxylique et un polyacide polymérique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5985366 A
- WO 2014111292 A
- WO 2014060456 A

- US 5521266 A
- US 3356627 A, Scott

**Non-patent literature cited in the description**

- **T. G. FOX.** *Bull. Am. Physics Soc.,* 1956, vol. 1 (3), 123

- Polymer Handbook. 1999, vol. 1, VI/193-277